# FASCICULE DE BREVET EUROPEEN

(11) **EP 0 320 409 B1**
(45) Date de publication et mention de la délivrance du brevet: **24.03.1993**
(21) Numéro de dépôt: 88420400.9
(22) Date de dépôt: 01.12.1988
(51) Int. Cl.: H01H 83/14, H02H 1/06, H01H 27/00

(54) **Déclencheur statique à source auxiliaire**
Statischer Auslöser mit externer Versorgung
Static release with external supply

(30) Priorité: 10.12.1987 FR 8717449
(43) Date de publication de la demande: 14.06.1989
(73) Titulaire: MERLIN GERIN, F-38050 Grenoble Cédex (FR)
(72) Inventeur: Schueller, Pierre, F-38050 Grenoble Cédex (FR); Garnier, Gilbert, F-38050 Grenoble Cédex (FR)
(74) Mandataire: Ritzenthaler, Jacques

(56) Documents cités:
- DE-A- 3 333 098
- FR-A- 2 394 911
- FR-A- 2 440 609
- GB-A- 1 271 373

## Description

L'invention est relative à un déclencheur statique d'un appareil de coupure du courant inséré dans les conducteurs électriques d'alimentation d'une charge pour interrompre automatiquement le courant parcourant ces conducteurs en cas de défaut, ledit déclencheur statique comprenant un circuit électronique de traitement d'un signal de défaut, émis par un détecteur de défaut pour provoquer le déclenchement dudit appareil de coupure, lors de l'apparition d'un défaut, et une source auxiliaire d'alimentation dudit circuit électronique raccordée à au moins deux desdits conducteurs.

L'électronique des déclencheurs statiques nécessite pour fonctionner une certaine énergie, et on distingue les déclencheurs à propre courant, dans lesquels l'énergie est empruntée au courant de défaut lui-même, et les dispositifs à source auxiliaire dans lesquels l'énergie est fournie par une source indépendante ou par le réseau électrique contrôlé. En dérivant l'énergie d'alimentation directement du réseau, on s'affranchit de toute source auxiliaire indépendante, et il est possible de séparer la fonction de détection de défaut et la fonction d'alimentation en énergie du déclencheur statique. La connexion permanente de la source auxiliaire au réseau présente toutefois l'inconvénient de soumettre la source auxiliaire aux conditions électriques du réseau, notamment aux tensions d'essais diélectriques qui peuvent atteindre des valeurs élevées, préjudiciables au bon fonctionnement de la source auxiliaire. Des mesures effectuées sur le réseau sont susceptibles d'être faussées par la connexion permanente de la source auxiliaire. Les réseaux peuvent présenter différentes tensions, et la source auxiliaire doit être adaptée à ces tensions, ce qui nécessite toute une gamme de déclencheurs statiques, dont le coût de fabrication et de stockage n'est pas négligeable.

La présente invention a pour but de permettre une déconnexion aisée de la source auxiliaire du réseau, et une adaptation de cette source auxiliaire à la tension du réseau, lors de la mise en place par l'utilisateur.

Le déclencheur statique selon l'invention est caractérisé en ce que dans le circuit de raccordement de la source auxiliaire auxdits deux conducteurs, est insérée au moins une prise susceptible de recevoir sélectivement une gamme de fiches agencées d'une part, pour interrompre ledit circuit de raccordement lorsqu'aucune fiche n'est enfichée dans ladite prise, et d'autre part d'assurer la fermeture du circuit de raccordement en position enfichée dans la prise en insérant une résistance électrique dans le circuit de raccordement, dont la valeur est déterminée par une sélection appropriée de l'une des fiches de ladite gamme, pour maintenir sensiblement constante la tension de la source auxiliaire, indépendamment de la tension desdits conducteurs électriques.

La déconnexion de la source auxiliaire peut être effectuée facilement par l'exploitant, par simple retrait d'une fiche lorsqu'il veut effectuer des essais ou des mesures sur la partie du réseau comprenant l'appareil de coupure. Le même déclencheur statique peut être utilisé sur des réseaux de tension différente, l'adaptation étant faite lors de la mise en place de l'appareil par un choix approprié de la fiche.

Les alimentations électroniques tolèrent une certaine plage de tensions d'entrée et avec un nombre limité de fiches, par exemple deux ou trois, il est possible de couvrir toute la gamme de tensions existant actuellement sur les différents réseaux. La source auxiliaire d'alimentation est conçue pour la tension minimale, en insérant une résistance fixe de valeur appropriée, et il est facile de comprendre que lors d'un montage sur un réseau de tension minimale, la fiche comportera une résistance de valeur nulle, tandis que cette valeur de résistance augmentera lorsque la tension du réseau est supérieure à cette valeur minimale. L'invention est applicable à tous les déclencheurs statiques, mais elle sera décrite par la suite en référence à un déclencheur statique pour un dispositif de protection différentielle qui est l'application préférentielle de l'invention. La fiche doit bien entendu être facilement accessible, de préférence sans démontage d'une partie de l'appareil, et dans le cas d'un appareil à boîtier moulé, la fiche est de préférence disposée sur la face avant ou tout au moins sur une face externe de l'appareil.

La source auxiliaire d'alimentation est raccordée à au moins deux conducteurs du réseau, avec insertion d'une fiche unique, dont l'enlèvement ou la mise en place permet la déconnexion ou l'insertion d'une résistance, mais il est avantageux de raccorder la source à plusieurs conducteurs, afin de conserver l'alimentation lors d'une défaillance de l'un des conducteurs du réseau. Plusieurs fiches sont alors nécessaires pour assurer la déconnexion ou l'insertion de résistances, mais ces fiches sont avantageusement groupées sur un support unique facilitant l'enlèvement et la mise en place.

D'autres avantages et caractéristiques ressortiront plus clairement de la description qui va suivre d'un mode de mise en oeuvre de l'invention donné à titre d'exemple non limitatif et représenté aux dessins annexés dans lesquels:
- la figure 1 est une vue schématique en perspective d'un appareil électrique à boîtier moulé, équipé d'un déclencheur statique selon l'invention;
- la figure 2 représente le schéma électrique d'un appareil bipolaire, selon la figure 1;
- la figure 3 est une vue analogue à celle de la figure 2 d'un appareil tripolaire.

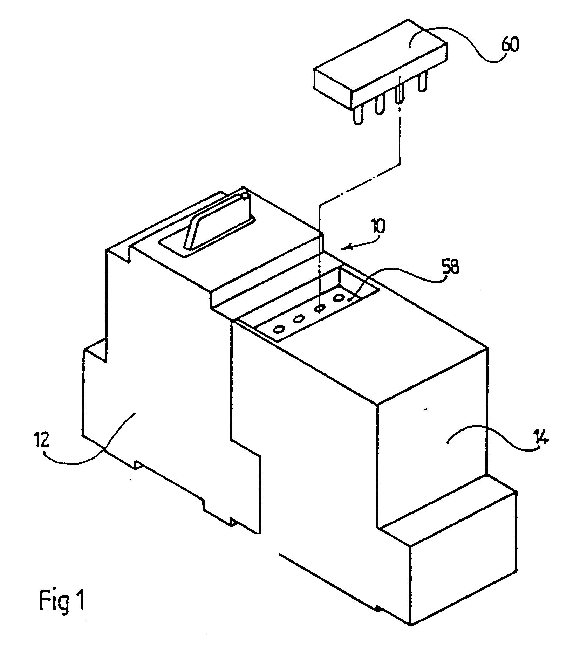

Sur les figures, un appareil électrique 10 de protection contre les courants de défaut, notamment un disjoncteur ou un interrupteur différentiel est constitué de deux blocs 12,14 à boîtiers moulés accolés, l'un des blocs 12, dénommé bloc disjoncteur assurant la coupure du courant, et l'autre bloc 14 dénommé bloc déclencheur, pilotant l'ouverture du bloc disjoncteur 12 lors d'une détection d'un courant différentiel. L'appareil 10 peut bien entendu comporter un boîtier unique dans lequel sont logés les blocs disjoncteur 12 et déclencheur 14. Dans le cas de boîtiers séparés, représentés sur la figure 1, ces derniers peuvent être accolés, soit par leurs faces inférieure pour le bloc 12 et supérieure pour le bloc 14, soit de toute autre manière appropriée. Le bloc déclencheur 14 peut commander l'ouverture du disjoncteur 12 lors d'un défaut différentiel et/ou, lors d'une surcharge ou d'un court-circuit ou en toute autre circonstance nécessitant une interruption du courant.

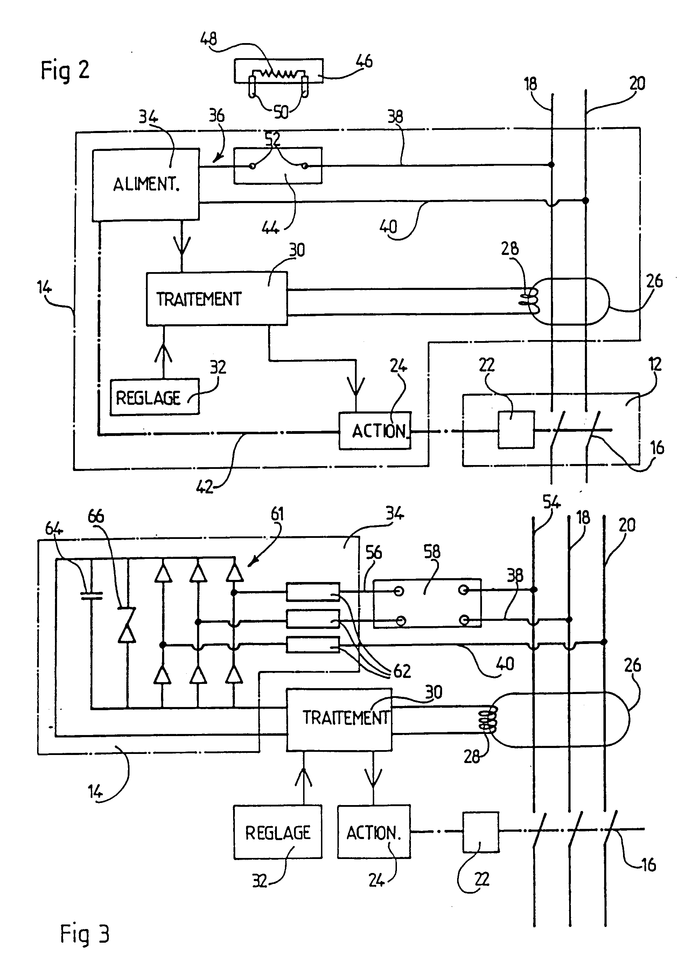

En se référant plus particulièrement à la figure 2, on voit un disjoncteur 12 comprenant une paire de contacts 16 de coupure de deux conducteurs 18,20, par exemple un conducteur de phase et un conducteur neutre, ou deux conducteurs de phase alimentant une charge non représentée. Les contacts 16 sont commandés par une serrure 22, pilotée par un relais ou actionneur de déclenchement 24 appartenant au bloc déclencheur 14. Le bloc déclencheur 14 comporte de plus, un capteur en forme de tore 26 entourant les deux conducteurs 18,20, et portant un enroulement secondaire 28 relié à un circuit électronique de traitement 30, dont la sortie est reliée à l'actionneur 24. Le circuit électronique de traitement 30 est agencé pour transmettre un signal de déclenchement à l'actionneur 24 lorsque le signal fournit par l'enroulement secondaire 28, qui représente un courant différentiel résiduel, dépasse un seuil prédéterminé. Un bloc de réglage 32 est connecté au circuit de traitement 30 pour permettre le réglage du ou des seuils de fonctionnement de ce circuit. L'électronique du circuit de traitement 30 est alimentée en courant, par une source auxiliaire d'alimentation 34 raccordée par un circuit de raccordement 36 à deux fils 38,40, aux conducteurs 18,20. De tels dispositifs différentiels sont bien connus des spécialistes, et il suffit de rappeler que le capteur 26 fournit uniquement un signal de commande, et que l'énergie d'alimentation de l'électronique, en l'occurrence du circuit électronique de traitement 30 et/ou, du relais 24 est dérivée des conducteurs 18,20. Une connexion 42 représentée en trait mixte sur la figure 2 permet une alimentation directe du relais 24 par la source auxiliaire 34, lorsque le relais est agencé pour ce type de commande.

Selon la présente invention, une prise 44 est insérée dans le fil 38 du circuit de raccordement 36. Cette prise 44 est agencée pour recevoir une fiche 46 schématiquement représentée en position enlevée sur la figure 2, laquelle fiche 46 assure la continuité du fil 38 en position enfichée dans la prise 44, et l'interruption du fil 38 lors d'un retrait de la fiche 46. Dans la fiche 46, est logée une résistance 48 permettant d'insérer dans le circuit de raccordement 36 une résistance, dont la valeur est appropriée à la tension des conducteurs 18,20. Une gamme de fiches 46 ayant des résistances 48, de valeur différente permet une adaptation aux différentes tensions des réseaux. La fiche 46 représentée sur la figure 2, est du type à broches 50, susceptibles d'être enfichées dans des alvéoles 52 de la prise 44, mais il est clair que toute autre connexion est réalisable, par exemple à bornes ou à contacts. Il est à noter que la prise 44 peut être insérée dans le fil 40, ou que chaque fil 38,40, peut comporter une prise 44, cette prise pouvant d'ailleurs être agencée en prise commune à quatre alvéoles, susceptible de recevoir une fiche commune 46 à quatre broches permettant d'assurer l'insertion d'une résistance 48 dans chacun des fils 38,40, ou éventuellement l'insertion d'une résistance dans l'un des fils 38,40, et le pontage de l'autre fil.

Lors du montage de l'appareil 10, l'installateur choisit une fiche 46, adaptée à la tension du réseau 18,20, et introduit cette fiche 46 dans la prise 44. Cette mise en place est particulièrement simple lorsque, selon l'invention, la prise 44 est disposée sur une face externe, notamment sur la face avant du boîtier. Lorsque l'exploitant veut appliquer une tension élevée aux conducteurs 18,20 en vue d'essais diélectriques, il protège l'appareil 10 en retirant la fiche 46.

La figure 3 représente le schéma d'un appareil tripolaire, les mêmes numéros de repères étant utilisés pour désigner des éléments analogues ou identiques à ceux de la figure 2. La source auxiliaire d'alimentation 34 est raccordée aux trois conducteurs 18,20,54, par exemple aux trois phases du réseau, par un circuit de raccordement 36 à trois fils 38,40,56. Une prise 58 à quatre alvéoles est insérée dans les fils 38,56, cette prise 58 étant susceptible de recevoir une fiche 60 à quatre broches pour assurer la continuité des fils 38,56, éventuellement avec insertion d'une résistance. La source auxiliaire d'alimentation 34 comporte un pont (61) de diodes à trois branches, comprenant chacune deux diodes conduisant alternativement, et dont le point de liaison est relié aux fils 38,40,56 par l'intermédiaire de résistances fixes 62. Le courant d'alimentation de l'électronique du circuit de traitement 30, est prélevé aux bornes de sortie du pont 61, auquel peuvent étre connectées une capacité 64 de filtrage et une diode Zener 66. Le fonctionnement est identique à celui décrit ci-dessus en référence à la figure 2, l'avantage d'un circuit de raccordement 36 à trois fils étant le maintien de l'alimentation lors d'une disparition de la tension sur l'un des fils. Si cet avantage pour un appareil triphasé n'est pas recherché, il est possible d'utiliser, soit un circuit de raccordement à deux fils, du type représenté sur la figure 2, soit un raccordement à deux fils représenté sur la figure 3 en omettant de brancher le fil 40. La valeur fixe des résistances 62 correspond à la tension minimale du réseau, de manière à utiliser des fiches 60, de résistance nulle, lors du montage d'un appareil sur un réseau de tension minimale.

## Revendications

1. Déclencheur statique d'un appareil de coupure (12) du courant inséré dans les conducteurs électriques (18,20,54) d'alimentation d'une charge pour interrompre automatiquement le courant parcourant ces conducteurs en cas de défaut, ledit déclencheur statique (14) comprenant un circuit électronique de traitement (30) d'un signal de défaut, émis par un détecteur de défaut (26,28) pour provoquer le déclenchement dudit appareil de coupure, lors de l'apparition d'un défaut et une source auxiliaire d'alimentation (34) dudit circuit électronique (30) raccordée à au moins deux (18,20) desdits conducteurs, caractérisé en ce que dans le circuit de raccordement (36) de la source auxiliaire (34) auxdits deux conducteurs est insérée au moins une prise (44,58) susceptible de recevoir sélectivement une gamme de fiches (46,60) agencées d'une part pour interrompre ledit circuit de raccordement (36) lorsque aucune fiche n'est enfichée dans ladite prise et d'autre part d'assurer la fermeture du circuit de raccordement (36) en position enfichée dans la prise en insérant une résistance électrique (48) dans le circuit de raccordement, dont la valeur est déterminée par une sélection appropriée de l'une des fiches (46,60) de ladite gamme pour maintenir sensiblement constante la tension de la source auxiliaire indépendamment de la tension desdits conducteurs électriques.

2. Déclencheur statique selon la revendication 1, caractérisé en ce que ladite source auxiliaire (34) comporte une résistance (62) de valeur fixe, qui lors de l'enfichage d'une fiche (46,60) est connectée en série de la résistance (48) associée à la fiche, et que la valeur de la résistance fixe est appropriée à la tension minimale desdits conducteurs électriques (18,20,54).

3. Déclencheur statique selon la revendication 1 ou 2 pour un dispositif de protection contre les courants de défaut à la terre, caractérisé en ce qu'il comporte un détecteur (26,28) de défaut à la terre, qui émet un signal de défaut appliqué audit circuit électronique de traitement (30) alimenté par ladite source auxiliaire (34).

4. Déclencheur statique selon la revendication 1,2 ou 3, caractérisé en ce qu'il est logé dans un boîtier moulé ayant une face externe portant ladite prise (44,58) pour permettre un enlèvement et/ou un enfichage aisé de la fiche (46,60) sélectionnée dans la prise.

5. Déclencheur statique selon l'une quelconque des revendications précédentes pour un appareil tripolaire de coupure, caractérisé en ce qu'il comporte un circuit de raccordement (36) de la source auxiliaire aux trois conducteurs traversant ledit appareil et que ladite fiche (60) est agencée pour interrompre ou insérer une résistance dans au moins deux des fils (38,56) du circuit de raccordement (36).

6. Déclencheur statique selon l'une quelconque des revendications précédentes, caractérisé en ce que ladite source auxiliaire (34) comporte un pont redresseur (61) et que ladite prise (44,58) est insérée dans le circuit de raccordement (36) dudit pont redresseur auxdits conducteurs électriques (18,20,54).

7. Déclencheur statique selon l'une quelconque des revendications précédentes, caractérisé en ce qu'il comporte un relais d'actionnement (24) du mécanisme (22) dudit appareil de coupure, ledit relais étant piloté par ledit circuit électronique de traitement (30) et alimenté par ladite source auxiliaire

## Claims

1. A solid-state trip device of a current breaking device (12) inserted in the electrical power supply conductors (18, 20, 54) of a load to automatically interrupt the current flowing in these conductors in the event of a fault occurring, said solid-state trip device (14) comprising an electronic processing circuit (30) of a fault signal, emitted by a fault detector (26, 28) to bring about tripping of said breaking device when a fault occurs, and an auxiliary power supply (34) of said electronic circuit (30) connected to at least two (18, 20) of said conductors, characterized in that in the connection circuit (36) of the auxiliary power supply (34) to the two said conductors there is inserted at least one socket (44, 58) capable of selectively receiving a range of plugs (46, 60) arranged on the one hand to interrupt said connection circuit (36) when there is no plug plugged into said socket and on the other hand to ensure making of the connection circuit (36) in the plugged-in position in the socket by inserting an electrical resistor (48) in the connection circuit, whose value is determined by the appropriate selection of one of the plugs (46, 60) of said range to maintain the auxiliary power supply voltage appreciably constant regardless of the voltage of said electrical conductors.

2. The solid-state trip device according to claim 1, characterized in that said auxiliary power supply (34) comprises a resistor (62) of fixed value, which when a plug (46, 60) is plugged in, is connected in series with the resistor (48) associated with the plug, and that the value of the fixed resistor is suited to the minimum voltage of said electrical conductors (18, 20, 54).

3. The solid-state trip device according to claim 1 or 2, for a ground fault current protective device, characterized in that it comprises a ground fault detector (26, 28), which emits a fault signal applied to said electronic processing circuit (30) supplied by said auxiliary power supply (34).

4. The solid-state trip device according to claim 1, 2 or 3, characterized in that it is housed in a molded case having an external face bearing said socket (44, 58) to enable the selected plug (46, 60) to be easily removed from and/or plugged into the socket.

5. The solid-state trip device according to any one of the above claims, for a three-pole switchgear device, characterized in that it comprises a connection circuit (36) of the auxiliary power supply to the three conductors passing through said switchgear device and that said plug (60) is arranged to interrupt or insert a resistance in at least two of the wires (38, 56) of the connection circuit (36).

6. The solid-state trip device according to any one of the above claims, characterized in that said auxiliary power supply (34) comprises a rectifier bridge (61) and that said socket (44, 58) is inserted in the connection circuit (36) of said rectifier bridge to said electrical conductors (18, 20, 54).

7. The solid-state trip device according to any one of the above claims, characterized in that it comprises an actuating relay (24) of the mechanism (22) of said switchgear device, said relay being controlled by said electronic processing circuit (30) and supplied by said auxiliary power supply (34).

## Patentansprüche

1. Elektronischer Auslöser eines in die Versorgungsleitungen (18, 20, 54) eines Lastkreises eingesetzten Schaltgeräts (12) zur automatischen Unterbrechung des Stroms in diesen Leitungen bei Auftreten eines Fehlers, wobei der genannte elektronische Auslöser (14) eine elektronische Schaltung (30) zur Verarbeitung eines von einer Fehlerstrom-Meßeinrichtung (26, 28) zur Bewirkung der Abschaltung des genannten Schaltgeräts im Fehlerfall ausgesandten Fehlersignals sowie eine mindestens an zwei der genannten Versorgungsleitungen (18, 20) angeschlossene Hilfsenergiequelle (34) für die genannte elektronische Schaltung (30) umfaßt, dadurch gekennzeichnet, daß in den Verbindungsstromkreis (36) zwischen der Hilfsenergiequelle (34) und den beiden genannten Leitungen mindestens eine Steckbuchse (44, 58) zur Aufnahme eines von mehreren Steckern (46, 60) integriert ist, die zum einen dazu dienen, den genannten Verbindungsstromkreis (36) durch Entfernen sämtlicher Stecker zu unterbrechen, und zum anderen den Verbindungsstromkreis (36) in der eingesteckten Stellung durch Zwischenschaltung eines elektrischen Widerstandes (48) zu schließen, dessen Wert durch Wahl des entsprechenden Steckers (46, 60) bestimmt wird, um die Versorgungsspannung für die Hilfsenergiequelle unabhängig von der Spannung in den genannten Versorgungsleitungen annähernd konstant zu halten.

2. Elektronischer Auslöser nach Anspruch 1, dadurch gekennzeichnet, daß die genannte Hilfsenergiequelle (34) einen Festwertwiderstand (62) umfaßt, der bei Einstecken eines Steckers (46, 60) mit dem jeweiligen Steckerwiderstand (48) in Reihe geschaltet wird, und daß der Festwertwiderstand entsprechend der Mindestspannung der genannten Versorgungsleitungen (18, 20, 54) gewählt wird.

3. Elektronischer Auslöser nach Anspruch 1 oder 2, für ein Erdfehlerstromschutzgerät dadurch gekennzeichnet, daß er eine Erdfehlerstrom-Meßeinrichtung (26, 28) umfaßt, die ein Fehlersignal an die von der genannten Hilfsenergiequelle (34) gespeiste genannte elektronische Schaltung (30) weiterleitet.

4. Elektronischer Auslöser nach Anspruch 1, 2 oder 3, dadurch gekennzeichnet, daß er in einem Isolierstoffgehäuse angeordnet ist, welches an einer Außenseite mit der genannten Steckbuchse (44, 58) ausgerüstet ist, um ein einfaches Einstecken und/oder Herausziehen der gewählten Stecker (46, 60) zu ermöglichen.

5. Elektronischer Auslöser nach einem der vorhergehenden Ansprüche, für ein dreipoliges Schaltgerät, dadurch gekennzeichnet, daß er einen Verbindungsstromkreis (36) zum Anschluß der Hilfsenergiequelle an die drei durch das genannte Schaltgerät verlaufenden Leitungen umfaßt und daß der genannte Stecker (60) dazu dient, einen Widerstand zwischen mindestens zwei Leitungen (38, 56) des Verbindungsstromkreises (36) zu schalten oder diese zu unterbrechen.

6. Elektronischer Auslöser nach einem der vorhergehenden Ansprüche, dadurch gekennzeichnet, daß die genannte Hilfsenergiequelle (34) einen Brückengleichrichter (61) umfaßt und daß die genannte Steckbuchse (44, 58) in den Verbindungsstromkreis (36) zwischen dem genannten Brückengleichrichter und den genannten Versorgungsleitungen (18, 20, 54) geschaltet ist.

7. Elektronischer Auslöser nach einem der vorhergehenden Ansprüche, dadurch gekennzeichnet, daß er ein Relais (24) zur Ansteuerung des Schaltmechanismus (22) des genannten Schaltgeräts umfaßt, wobei das genannte Relais durch die genannte elektronische Schaltung (30) angesteuert und durch die genannte Hilfsenergiequelle gespeist wird.
